# FASCICULE DE BREVET EUROPEEN

(11) **EP 2 311 004 B1**
(45) Date de publication et mention de la délivrance du brevet: **03.09.2014**
(21) Numéro de dépôt: 09772749.9
(22) Date de dépôt: 03.07.2009
(51) Int. Cl.: G06T 7/00, G06K 9/46

(54) **METHODE DE TRAÇAGE DU CONTOUR VRAISEMBLABLE D'UN ELEMENT ANATOMIQUE SUR UNE IMAGE DE COUPE**
VERFAHREN ZUM VERFOLGEN DER WAHRSCHEINLICHEN KONTUR EINES ANATOMISCHEN ELEMENTS IN EINEM BILD EINES QUERSCHNITTS
METHOD OF TRACING THE LIKELY CONTOUR OF AN ANATOMICAL ELEMENT ON AN IMAGE OF A CROSS SECTION

(30) Priorité: 04.07.2008 FR 0854572
(43) Date de publication de la demande: 20.04.2011
(73) Titulaire: Theraclion, 92240 Malakoff (FR); Centre National de la Recherche Scientifique, 75016 Paris (FR); Institut National des Sciences Appliquées de Lyon, 69100 Villeurbanne (FR)
(72) Inventeur: PECHOUX, Thierry, F-75019 Paris (FR); VRAY, Didier, F-69360 Ternay (FR)
(74) Mandataire: CAPRI
(86) Numéro de dépôt international: PCT/FR2009/051305
(87) Numéro de publication internationale: WO 2010/001067

(56) Documents cités:
- US-A- 5 072 384
- US-A- 5 734 739
- US-A1- 2005 096 528
- PELLE ET AL: "Microcomputer-based system for automatic analysis of M-mode echocardiograms" JOURNAL OF BIOMEDICAL ENGINEERING, BUTTERWORTH, GUILDFORD, GB, vol. 15, no. 4, 1 juillet 1993 (1993-07-01), pages 274-278, XP022444986 ISSN: 0141-5425
- LIE W N ET AL: "A robust dynamic programming algorithm to extract skyline in images for navigation" PATTERN RECOGNITION LETTERS, ELSEVIER, AMSTERDAM, NL, vol. 26, no. 2, 15 janvier 2005 (2005-01-15), pages 221-230, XP025292241 ISSN: 0167-8655 [extrait le 2005-01-15]
- HARALICK R M ET AL: "Context dependent edge detection" PROCEEDINGS OF THE CONFERENCE ON COMPUTER VISION AND PATTERN RECOGNITION. ANN ARBOR, JUNE 5 - 9, 1988; [PROCEEDINGS OF THE CONFERENCE ON COMPUTER VISION AND PATTERN RECOGNITION], WASHINGTON, IEEE COMP. SOC. PRESS, US, vol. -, 5 juin 1988 (1988-06-05), pages 223-228, XP010012852 ISBN: 978-0-8186-0862-9

## Description

La présente invention concerne une méthode de traçage du contour vraisemblable d'un élément anatomique sur une image de coupe d'un site anatomique. L'image peut par exemple être une image échographique composée de pixels ayant des intensités différentes. L'élément anatomique est représenté par des pixels d'intensité caractéristique sensiblement identique et bordé de pixels d'intensité sensiblement différente de manière à identifier visuellement l'élément anatomique sur l'image de coupe sans pouvoir précisément délimiter son contour. La présente invention concerne également un procédé de surveillance d'un déplacement d'une cible à traiter qui peut utiliser la méthode de traçage du contour vraisemblable de l'invention. La présente invention concerne d'autre part un dispositif de traitement thérapeutique comprenant des moyens pour suivre le déplacement d'un repère anatomique visible sur des images de coupe. La présente invention trouve une application privilégiée dans le domaine médical, et plus particulièrement dans le domaine du traitement médical utilisant des images de coupe, que l'on peut obtenir à l'aide de techniques bien connues, comme par exemple l'échographie, l'IRM, etc.

Dans le domaine des traitements thérapeutiques, il est en général nécessaire d'avoir une connaissance parfaite du site anatomique dans lequel se trouve une cible à traiter. Outre cette cible à traiter, le site anatomique peut comprendre d'autres éléments anatomiques qu'il est nécessaire d'identifier et de localiser pour diverses raisons.

Les images de coupe, telles que les images échographiques par exemple, offrent une qualité d'images dont la résolution est relativement faible. En effet, une telle image ne permet pas de visualiser précisément le contour ou les limites des éléments anatomiques visibles sur l'image de coupe. Ainsi, le contour de l'élément anatomique se présente souvent sous la forme d'une zone plus ou moins épaisse et irrégulière. Ceci provient bien évidemment des nombreuses perturbations qui affectent de manière néfaste la qualité de l'image de coupe. Dans le cas d'une image échographique, celle-ci est affectée par de nombreux échos parasites qui sont cependant représentés visuellement sur l'image de coupe.

Un premier but de la présente invention est de surmonter cet inconvénient lié à la représentation imprécise du contour des éléments anatomiques en définissant un procédé de traçage du contour vraisemblable de l'élément anatomique sur l'image de coupe. Un autre but de la présente invention est d'utiliser l'image de coupe, et plus particulièrement un ou plusieurs élément(s) anatomique(s) visible(s) sur cette image, pour surveiller le déplacement de la cible à traiter. La méthode de traçage de l'invention peut notamment être utilisée dans le procédé de surveillance pour tracer de manière claire et visible le contour de l'élément anatomique qui va être utilisé comme repère anatomique sur l'image de coupe. Dans le traitement thérapeutique de la thyroïde, il est par exemple utile de détecter les déplacements de thyroïde qui peuvent provenir de la déglutition du patient ou d'un mouvement de sa tête.

Encore un autre but de la présente invention est de mettre en oeuvre ce procédé de surveillance du déplacement de la cible à traiter dans un dispositif de traitement thérapeutique.

Dans l'art antérieur, on connaît le document US-A- 5 734 739 qui décrit les caractéristiques du préambule de la revendication 1.

Pour atteindre ces buts, la présente invention définit une méthode de traçage du contour vraisemblable d'un élément anatomique sur une image de coupe d'un site anatomique, selon la revendication 1.

Ainsi, l'étape permet à partir des nombreux pixels formant l'image de coupe de déterminer pratiquement sans risque d'erreur le pixel qui est assurément situé sur le contour de l'élément anatomique, et de considérer les chemins continus de pixels passant par ce pixel « graine », pour finalement sélectionner le chemin continu ayant le meilleur score de chemin. En d'autres termes, le pixel graine peut être préalablement déterminé pour restreindre les chemins continus de pixels uniquement à ceux passant par le pixel graine.

Ainsi, la méthode de traçage de l'invention utilise comme source l'image de coupe représentant l'élément anatomique dont le contour doit être déterminé, et traite cette image de manière à pouvoir reconstituer le contour vraisemblable de l'élément anatomique que l'on peut alors afficher sur l'image de coupe en le superposant sur l'élément anatomique. En mettant en oeuvre la méthode de traçage séquentiellement ou en continu, le contour vraisemblable peut être affiché en permanence sur l'image de coupe représentant l'élément anatomique, de sorte que le contour vraisemblable suit automatiquement l'élément anatomique, lorsqu'il se déplace sur l'image de coupe. De cette manière, on peut visualiser de manière très claire le contour de l'élément anatomique, même si ce dernier subit des déformations ou se déplace. En variante, on peut envisager des situations dans lesquelles on pourrait calculer le contour puis utiliser la courbe obtenue, par exemple pour recaler des images, sans pour autant l'afficher.

L'originalité de la méthode réside dans le fait de considérer des chemins continus de pixels (un par colonne) et d'attribuer à chaque chemin un score qui est en rapport directe ou indirect avec les scores de chaque pixel du chemin considéré. Le score du chemin continu peut être égal ou proportionnel à la somme des scores des pixels constituant le chemin.

Avantageusement, l'étape b) comprend l'étape consistant à établir un différentiel d'intensité pour chaque pixel entre une bande moyennée supérieure (Bₛ) de pixels et une bande moyennée inférieure (Bᵢ) de pixels situées de part et d'autre du pixel considéré (Pᵢ), ce différentiel représentant le score de pixel.

Avantageusement, après l'étape e), on prévoit une étape de lissage du chemin continu représentant le contour vraisemblable. Cette étape de lissage peut être obtenue par filtrage selon les étapes suivantes :
e1) rendre éventuellement périodique le chemin continu de l'étape c), si cela n'est pas le cas, pour obtenir une courbe périodique,
e2) filtrer la courbe périodique en ne conservant que les premières harmoniques de la décomposition en série de Fourier pour la lisser,
e3) extraire le contour continu lissé vraisemblable de la courbe lissée. Avantageusement, les étapes d) et e) sont effectuées simultanément à l'aide d'une technique de programmation dynamique.

L'utilisation de colonne de pixels dans l'étape a) est particulièrement bien appropriée pour tracer le contour vraisemblable d'un élément anatomique linéaire, tel que par exemple la peau. Sur l'image de coupe, la représentation de la peau s'étend d'un côté à l'autre de l'image en formant un segment de courbe ayant par conséquent un début et une fin. Toutefois, certains éléments anatomiques présentent une configuration fermée ou en boucle de sorte qu'il n'y a pas de début ni de fin. Dans ce cas, l'utilisation directe de colonne de pixels n'est pas appropriée, puisque chaque colonne va couper au moins deux fois le contour de l'élément anatomique. Or, ceci n'est pas possible avec le procédé de traçage de l'invention. Pour pouvoir tout de même utiliser la méthode de traçage de l'invention dans le cas d'élément anatomique ayant un contour en boucle, la présente invention prévoit que l'étape a comprenne une étape préalable consistant à : a1) tracer des rayons à partir d'un point situé dans la boucle fermée, les rayons croisant une fois le contour de l'élément anatomique, a2) arranger les rayons parallèlement côte à côte pour former des colonnes de pixels. De cette manière, on se retrouve dans la même configuration que pour un élément anatomique linéaire tel que la peau. La méthode de traçage peut alors être appliquée à ces rayons disposés sous forme de colonnes de pixels de l'étape a).

Le principe de cette méthode de traçage est donc de délimiter avec précision le contour d'un élément anatomique qui est représenté de manière grossière ou imprécise sur une image de coupe. La délimitation précise de ce contour permet d'afficher très clairement le contour de l'élément anatomique, et de la suivre sur l'image de coupe lorsqu'il se déplace ou se déforme.

La présente invention a également pour objet un procédé de surveillance d'un déplacement d'une cible à traiter, notamment par ultrasons, au cours de son traitement, à partir d'une image de coupe d'un site anatomique représentant la cible, le procédé comprenant les étapes suivantes : choisir au moins un repère anatomique visible sur l'image, tracer le contour du repère anatomique sur l'image, prendre une image de référence, par exemple avant le début du traitement, et comparer les images lors du traitement avec l'image de référence pour détecter un éventuel déplacement inattendu du contour du repère. Dans ce procédé de surveillance, on utilise un élément anatomique visible sur l'image comme repère anatomique dont on trace le contour sur l'image. Ensuite, il est aisé de détecter un déplacement du contour du repère anatomique à partir d'une image de référence. Là encore, comme dans la méthode de traçage, on utilise un élément anatomique visible sur l'image de coupe pour en tracer le contour sur l'image.

Avantageusement, le procédé comprend de suspendre le traitement de la cible lorsqu'un déplacement inattendu du contour du repère anatomique est détecté à partir d'une image de référence. Avantageusement, le procédé comprend de régler les paramètres de traitement en fonction de la position du repère. De préférence, l'étape de traçage du contour est effectuée selon la méthode de traçage définie ci-dessus.

L'invention a également pour objet l'utilisation du procédé de surveillance d'un déplacement d'une cible à traiter pour le traitement de la thyroïde en prenant comme repère anatomique la peau et/ou la carotide.

D'autre part, la présente invention a aussi pour objet un dispositif de traitement thérapeutique comprenant des moyens de traitement thérapeutique pour traiter une cible, des moyens d'imagerie fournissant des images de coupe d'un site anatomique comprenant la cible à traiter, et des moyens pour suivre le déplacement d'au moins un repère anatomique visible sur les images de coupe, caractérisé en ce que les moyens de suivi comprennent des moyens de traçage sur les images de coupe du contour du repère anatomique pour détecter un éventuel déplacement inattendu du contour lors du traitement. Le dispositif met ainsi en oeuvre le procédé de surveillance défini ci-dessus. Avantageusement, le dispositif comprend en outre des moyens de suspension du traitement qui sont activés lorsque le déplacement inattendu dépasse une limité prédéterminée. De préférence, les moyens de traçage comprennent un logiciel mettant en oeuvre la méthode de traçage définie ci-dessus.

Un principe commun à la méthode de traçage, au procédé de surveillance et au dispositif de traitement réside dans le fait que l'on se sert de l'image de coupe sur laquelle on identifie un élément anatomique dont on va tracer le contour directement sur l'image de coupe.

L'invention sera maintenant plus amplement décrite en référence aux dessins joints donnant à titres d'exemples non limitatifs un mode de réalisation de l'invention.

Sur les figures :
- la figure 1 est une vue d'ensemble d'un dispositif de traitement thérapeutique selon l'invention,
- la figure 2 est également une vue schématique montrant une partie du dispositif de traitement de la figure 1 en place sur un patient pour traiter la thyroïde,
- la figure 3 est une image de coupe schématique du site anatomique de la figure 2, à savoir le cou d'un patient représentant la peau S, la carotide C et la thyroïde T qui est la cible à traiter,
- la figure 4 est un schéma illustratif visant à expliquer une étape de la méthode de traçage du contour vraisemblable selon l'invention,
- la figure 5 est une vue schématisée d'une image de coupe semblable à celle de la figure 3 faisant apparaître des segments de chemin continus utilisés dans la méthode de traçage du contour vraisemblable selon l'invention,
- la figure 6 est une représentation schématique visant également à expliquer la méthode de traçage de l'invention,
- les figures 7 à 10 sont des graphes visant à expliquer encore d'autres étapes de la méthode de traçage selon l'invention,
- la figure 11 est une vue schématique très fortement agrandie d'une carotide tel que visible sur une image de coupe pour expliquer une autre étape de la méthode de traçage selon l'invention, et
- la figure 12 est une représentation schématique semblable aux figures 3 et 5 montrant le contour vraisemblable de la peau et de la carotide déterminé à l'aide de la méthode de traçage de l'invention tracé sur les images de coupe en les superposant respectivement sur la peau et la carotide.

Pour illustrer la présente invention, il sera fait référence au traitement thérapeutique de la thyroïde. Bien entendu, la présente invention peut s'appliquer à n'importe quel type de cible à traiter, comme par exemple la prostate.

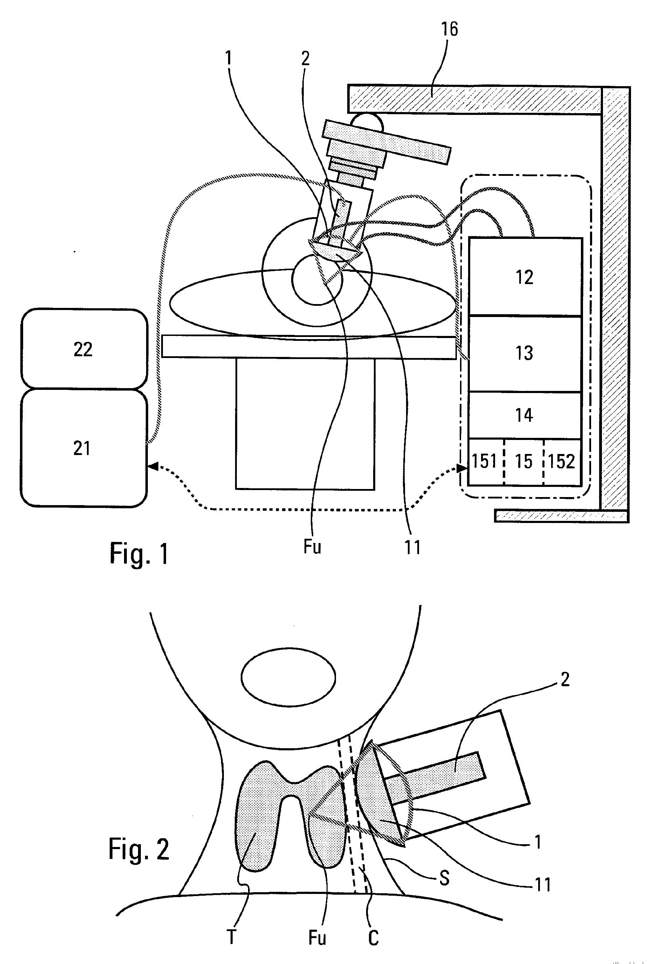

Il sera d'abord fait référence à la figure 1 pour décrire en détail les différents éléments constitutifs du dispositif de traitement thérapeutique de l'invention.

Le dispositif comprend tout d'abord une source d'émission acoustique 1 qui peut avantageusement être un transducteur ultrasonore adapté à produire un faisceau d'ultrasons Fu. De préférence, le transducteur ultrasonore est du type focalisé HIFU permettant de produire un faisceau focalisé d'ultrasons en un point focal précis. Le transducteur peut aussi être du type à barrettes. Le transducteur 1, comme on peut le voir sur la figure 2, peut comprendre une chambre remplie d'un fluide de couplage à travers lequel se propagent les faisceaux d'ultrasons. La chambre peut par exemple être délimitée par un ballonnet souple destiné à venir en contact intime avec une surface externe S d'une zone d'un corps où se situe une cible à traiter T. En général, la surface externe S est la peau du patient. Pour faire circuler le liquide de couplage à l'intérieur de la chambre 11, il est en général prévu des moyens de circulation 12 qui permettent de réguler le débit et la température du fluide de couplage à l'intérieur de la chambre 11. Le transducteur pour fonctionner a bien entendu besoin d'une alimentation de puissance 13 ainsi que d'une commande de déplacement 14 qui permet de déplacer et de localiser avec précision le transducteur par rapport au patient. Pour ce faire, le transducteur 1 est de préférence monté sur un bras articulé 16. Enfin, le transducteur est couplé à un ordinateur 15 qui permet de gérer tous les paramètres du transducteur, comme sa puissance, sa fréquence, sa durée d'impulsion, etc.

Le dispositif de traitement de l'invention comprend également des moyens d'imagerie qui peuvent par exemple se présenter sous la forme d'une sonde échographique 2 couplée à un échographe 21 et un écran de visualisation 22 qui affiche des vues ou images en coupe du site anatomique parcouru par la sonde 2. La sonde 2 est couplée mécaniquement au transducteur 1 comme on peut le voir sur les figures 1 et 2. Plus précisément, la sonde 2 et le transducteur 1 sont solidaires l'un de l'autre de sorte que la sonde 2 suit le point focal des faisceaux d'ultrasons Fu. La zone d'intensité maximale du faisceau d'ultrasons Fu est toujours représentée sur l'image de l'écran 22. Pour cela l'échographe 21 peut être couplé à l'ordinateur 15 du transducteur comme on peut le voir sur la figure 1. A la place d'une imagerie échographique, on peut utiliser une imagerie IRM, RX ou un scanner.

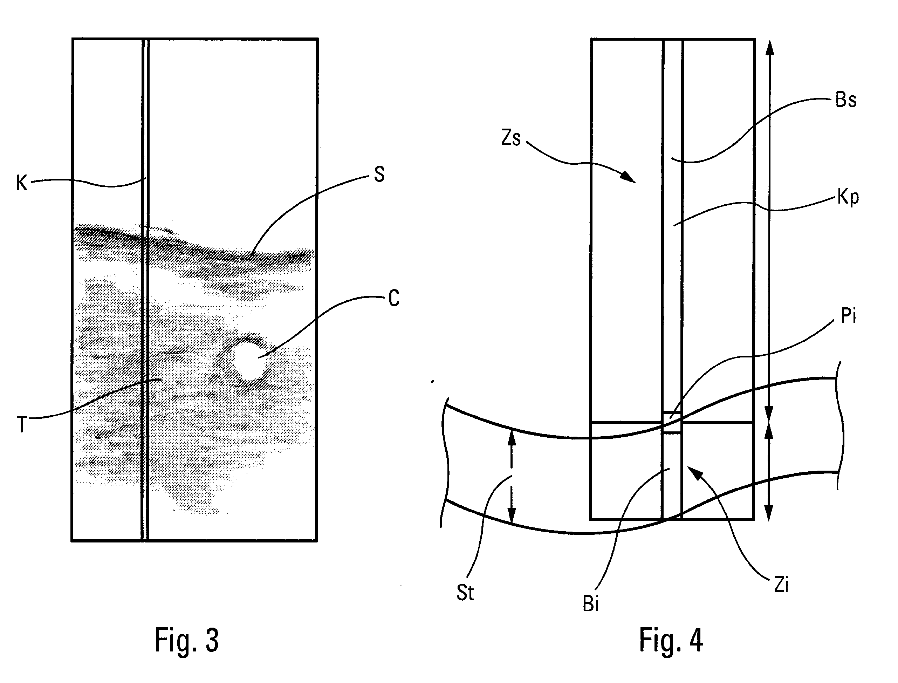

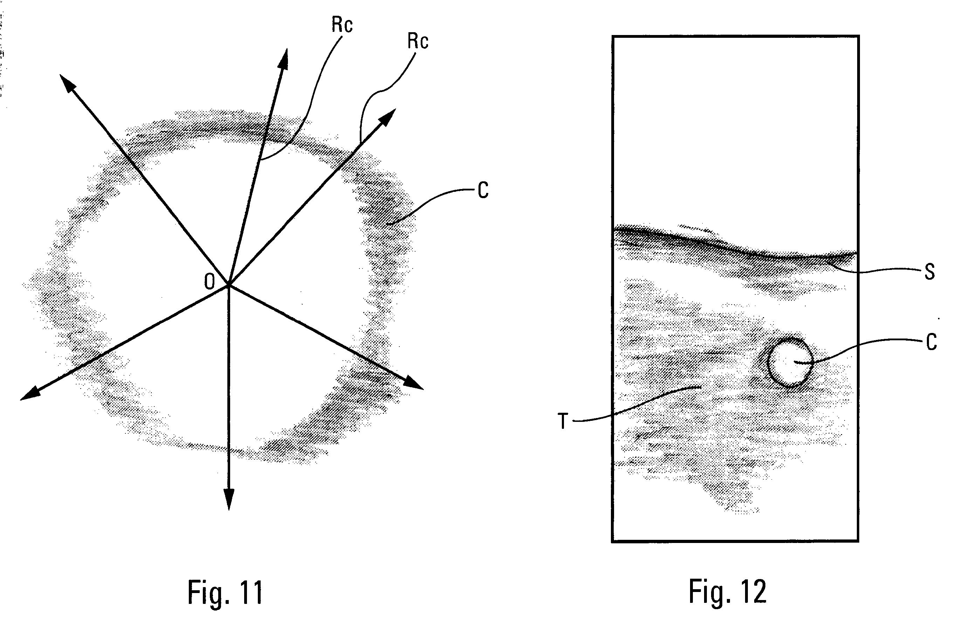

Le dispositif de traitement thérapeutique de l'invention comprend également des moyens 151 permettant de suivre le déplacement d'au moins un repère anatomique visible sur les images de coupe affichées par l'écran de visualisation 22. S'agissant en l'occurrence du traitement de la thyroïde, les images de coupe, telles que celle visible sur la figure 3, laissent apparaître la peau S ainsi que la carotide C du patient, en plus de la thyroïde T à traiter. Selon l'invention, la peau S et/ou la carotide C sont des éléments anatomiques qui peuvent être utilisées comme repère anatomique pour suivre les déplacements de l'image. La peau S et la carotide C sont des éléments anatomiques particuliers, en ce sens qu'ils peuvent être identifiés sur les images de coupe, sans pour autant pouvoir délimiter précisément leur contour. En d'autres termes, le contour de la peau S et de la carotide C sont perceptibles sur l'image, mais seulement de manière floue ou peu discernable. Il serait éventuellement possible de tracer manuellement leur contour sur l'image de coupe, mais on ne peut pas alors s'assurer que le contour que l'on vient de tracer suit réellement le contour effectif. Nous verrons ci-après lors de l'explication de la méthode de traçage selon l'invention comment le contour vraisemblable de ces éléments anatomiques ou repères anatomiques peuvent être tracés avec précision. Quoiqu'il en soit, les moyens peuvent suivre le déplacement de la peau S et/ou de la carotide C et peuvent se présenter sous la forme d'un logiciel intégré à l'ordinateur 15. De manière très schématique, les moyens de suivi ont été désignés par la référence numérique 151 sur la figure 1. Selon l'invention, ces moyens de suivi comprennent des moyens de traçage sur les images de coupe du contour du repère ou élément anatomique, en l'occurrence la peau S et/ou la carotide C, pour détecter un éventuel déplacement inattendu du contour de ces repères lors du traitement. Plus précisément, le contour de la peau S et/ou de la carotide C est tracé sur l'image de coupe affiché sur l'écran de visualisation 22 à l'endroit le plus vraisemblable où se situe le contour réel. Lorsque la sonde 2 est déplacée sur le site anatomique, la peau S et/ou la carotide C se déplace(nt) sur l'image de coupe, et les moyens de suivi 151 permettent d'établir un nouveau tracé de contour de la peau S et/ou de la carotide C qui se superpose à nouveau au contour réel. En d'autres termes, le tracé du contour de la peau S et/ou de la carotide C suit le déplacement sur l'image de coupe du repère ou élément anatomique S et/ou C. Lorsque le déplacement du contour du repère anatomique considéré est prévu ou reflétant des conditions de traitement normales, le transducteur 1 continue à traiter la cible, à savoir la thyroïde T. En revanche, lorsque le déplacement du contour du repère anatomique est inattendu ou reflète des conditions anormales, le transducteur 1 est arrêté. Pour ce faire, le dispositif de traitement comprend des moyens de suspension 152 qui peuvent être intégrés également à l'ordinateur 15. Ces moyens de suspension 152 du traitement sont activés dès lors que le déplacement inattendu dépasse par exemple une certaine limite prédéterminée. Le but de ces moyens de suivi 151 est que le transducteur 1 ne traite pas une zone du site anatomique qui n'est pas la cible à traiter, au risque d'endommager cette zone très certainement saine. Lorsque le transducteur 1 se déplace sur le site anatomique de manière prédéterminée ou prévue, c'est-à-dire dans des conditions normales de traitement, les moyens de suivi 151 détectent un déplacement normal du contour de la peau et/ou de la carotide, mais les moyens de suspension restent inactivés. En revanche, dès que le transducteur 1 s'est déplacé de manière imprévisible ou inattendu, c'est-à-dire ne respectant pas des conditions normales de traitement, les moyens de suivi 151 vont détecter le déplacement du contour de la peau et/ou de la carotide, et du fait que ce déplacement dépasse la limite prédéterminée, les moyens de suspension sont activés et le traitement du transducteur 1 est stoppé ou suspendu temporairement. Très concrètement, avant le début du traitement, l'opérateur choisi un élément ou repère anatomique qui est visible sur l'image de coupe. En général, on choisit la peau S et la carotide C, mais l'un d'entre eux peut être suffisant. Le choix combiné de ces deux repères est avantageux du fait que la peau S est plutôt linéaire, alors que la carotide C est plutôt annulaire. Ensemble, le repérage est fiable et précis. Après avoir choisi ces repères, l'opérateur trace le contour de la peau S et de la carotide C directement sur l'image de coupe affichée sur l'écran de visualisation 22, et ceci à l'aide des moyens de suivi et de traçage 151 intégrés à l'ordinateur 15. Une image de référence est alors prise faisant apparaître sur l'écran la peau et la carotide avec leur tracé de contour superposé. Ceci est visible sur la figure 12. Le traitement peut alors débuté, à savoir, le transducteur 1 peut émettre des faisceaux d'ultrasons, de préférence focalisés, en direction de la cible à traiter. Au cours du traitement, les moyens de suivi 151 comparent les images de coupe du site anatomique avec les images de référence prises avant le traitement pour détecter un éventuel déplacement inattendu du contour de la peau et de la carotide. Les contours de la peau et de la carotide sont tracés en continu au fur et à mesure que l'image se déplace. La comparaison peut être faite avec l'image de référence prise avant le début du traitement, ou en variante, les images peuvent être comparées avec l'image précédente. Si un déplacement inattendu est détecté, le transducteur 1 est stoppé. En général, un déplacement inattendu se produit lorsque le patient bouge, de sorte qu'il déplace la cible à traiter par rapport au transducteur 1. Ceci est notamment le cas dans le cadre du traitement de la thyroïde lorsque le patient avale ou déglutit, ou encore lorsqu'il tousse. Il peut également arriver que le patient tourne la tête, ce qui a une influence au niveau du cou, et par conséquent de la thyroïde. Grâce au suivi du déplacement du contour d'un ou de plusieurs repère(s) ou élément(s) anatomique(s), il est possible de détecter les comportements du patient qui pourraient amener à ce que le transducteur atteigne une zone qui n'est pas la cible à traiter.

En plus de cette capacité à détecter les comportements inappropriés du patient, les moyens de suivi 151 permettent de mesurer avec précision la position de la peau par rapport au transducteur 1. En fonction de la distance séparant le transducteur de la peau, on peut ainsi régler les paramètres de traitement, et notamment l'intensité du faisceau d'ultrasons en fonction de l'épaisseur de chair ou de tissu que le faisceau doit traverser pour atteindre la cible à traiter. Par conséquent, les moyens de suivi 151 permettent très simplement de mesurer la distance séparant la peau du transducteur, ou encore l'épaisseur du tissu à traverser.

On vient de voir que le dispositif de traitement thérapeutique et le procédé de surveillance de l'invention utilise le traçage du contour d'un élément ou repère anatomique sur l'image de coupe pour détecter un éventuel déplacement inattendu de cet élément anatomique sur l'image de coupe, déplacement qui est représentatif en général d'un mouvement ou comportement inapproprié du patient. Pour permettre le traçage du contour de l'élément anatomique, la présente invention propose également une méthode de traçage du contour vraisemblable de l'élément anatomique sur l'image de coupe. Cette méthode de traçage sera maintenant décrite en référence aux figures 3 à 12. Cette méthode de traçage utilise comme point de départ l'image de coupe affichée sur les moyens de visualisation et fournie par la sonde échographique. Toutefois, à la place de la sonde, on peut utiliser n'importe quelle autre technique permettant d'obtenir une image de coupe. La figure 3 représente de manière schématique une image de coupe telle que l'on pourrait l'observer sur l'écran de visualisation. Toutefois, la figure 3 constitue plutôt un négatif de l'image de coupe telle que l'on pourrait l'observer sur l'écran de visualisation. En effet, sur l'écran, les parties claires de la figure 3 sont représentées en noir, alors que les parties plus ou moins foncées, sont représentées avec des dégradés de gris allant jusqu'au blanc. Pour des raisons de simplification, nous avons utilisé cette représentation négative de l'image de coupe. On peut y voir une partie blanche supérieure et une partie inférieure comprenant des zones plus ou moins foncées et blanches. La partie supérieure blanche représente le liquide de propagation situé à l'intérieur du ballonnet. Le ballonnet est en contact de la peau S et peut dans certains cas être représenté par un trait relativement enfoncé. Très souvent, le ballonnet est confondu avec la peau. Comme on peut le voir sur la figure 3, la peau S n'est pas représentée avec un trait net et fin, mais au contraire par une zone plus ou moins bien délimitée. Il est donc difficile dans ces conditions de pouvoir délimiter avec précision le contour de la peau S. En dessous de la peau, on peut remarquer la carotide C qui est de forme sensiblement circulaire. A nouveau, son contour est difficilement délimitable, puisqu'il est constitué par une sorte de couronne foncée dont les bords sont irréguliers. A gauche de la carotide C, on peut également distinguer la thyroïde T qui constitue ici la cible à traiter. Il serait éventuellement possible de tracer à la main le contour vraisemblable S et de la carotide C directement sur l'image de coupe. Toutefois, selon l'invention, la méthode de traçage utilise une succession d'étapes complexes permettant de déterminer à partir de l'image de coupe le contour vraisemblable de la peau S et/ou de la carotide C.

L'image de coupe est constituée de pixels présentant des intensités différentes. On peut notamment remarquer que les pixels représentant la peau S et la carotide C présentent une intensité caractéristique sensiblement identique de manière à former ces zones de nuance sensiblement constante. On peut notamment remarquer que la zone au-dessus de la peau S est totalement blanche, de même que la zone située à l'intérieur du contour de la carotide C. S'agissant d'une image de coupe échographique, l'intensité des pixels varie de blanc à noir en passant par les différentes nuances de gris. On peut toutefois imaginer que les pixels soient également des pixels de couleur avec des nuances. Pour une raison de simplification, nous allons considérer des pixels allant simplement du noir au blanc. A nouveau, il ne faut pas oublier que la représentation de la figure 3 est une représentation négative, les zones blanches étant en réalité noires et les zones noires étant en réalité blanches sur l'écran de visualisation.

Pour commencer, nous allons considérer en premier la peau S. Le traçage du contour de la carotide sera traité ultérieurement. La première étape de la méthode de traçage du contour vraisemblable de la peau selon l'invention consiste à former des colonnes K de pixels Pᵢ passant par la peau S. Les colonnes K sont ici disposées verticalement, étant donné que la peau S s'étend sensiblement horizontalement d'un côté à l'autre de l'écran de visualisation.

Pour expliquer la première étape de la méthode de traçage, on se référera à la figure 4. Dans chaque colonne K, on va calculer pour chaque pixel Pᵢ une valeur propre que l'on peut désigner sous le terme de « score ». Pour déterminer le score propre à chaque pixel Pᵢ, on va considérer une section de colonne Kp ayant un nombre de pixels défini de hauteur. Le pixel Pᵢ dont on veut calculer le score, est toujours positionné au même endroit de cette section de colonne Kp. On peut par exemple positionner le pixel Pᵢ à 10 ou 11 pixels du bord inférieur. Cette valeur de 10 ou 11 pixels peut être déterminée en fonction de l'épaisseur estimée de la peau Sₜ tel que l'on peut l'observer sur l'écran de visualisation. Ainsi, dans la section de colonne Kp, il y a une bande Bᵢ d'environ 10 pixels en dessous du pixel Pᵢ dont on veut calculer le score et une bande Bₛ d'environ 40 pixels au-dessus. L'écran peut ainsi être divisé en deux zones, une zone inférieure Zi d'une largeur de 10 ou 11 pixels et une zone supérieure Zs d'une hauteur de 40 pixels. On calcule alors l'intensité moyenne de la section de colonne Kp dans la bande Bᵢ et dans la bande Bₛ et on établit la différence de ces moyennes d'intensité qui donne une valeur qui va être attribuée aux pixels Pᵢ comme étant son score propre. Cette opération est ainsi effectuée pour chaque pixel Pᵢ de la colonne K. Pour ce faire, on déplace la section de colonne Kp sur la colonne K avec un pas de 1 pixel en se déplaçant par exemple du haut en bas de l'écran. On comprend aisément que le score du pixel qui est situé sur la peau S va avoir un score élevé, étant donné que la bande Bₛ située au-dessus du pixel est complètement claire, alors que la bande Bᵢ située en dessous du pixel est très sombre. Le contraste est maximal, de sorte que la différence sera également maximale. Ce pixel aura donc un score particulièrement élevé et caractéristique de sa position sur le contour de la peau. Un score est ainsi établi pour chaque pixel de toutes les colonnes K en balayant l'écran de gauche à droite ou de droite à gauche. Pour chaque colonne K, il sera alors aisé de déterminer quel est le pixel qui a le score le plus caractéristique du contour de la peau S. Ce pixel de meilleur score est désigné Pₓ. De part et d'autre de ce pixel Pₓ dans la colonne K, il y a d'autres pixels Pᵢ avec de bons scores, mais pas aussi bon que celui du pixel Pₓ.

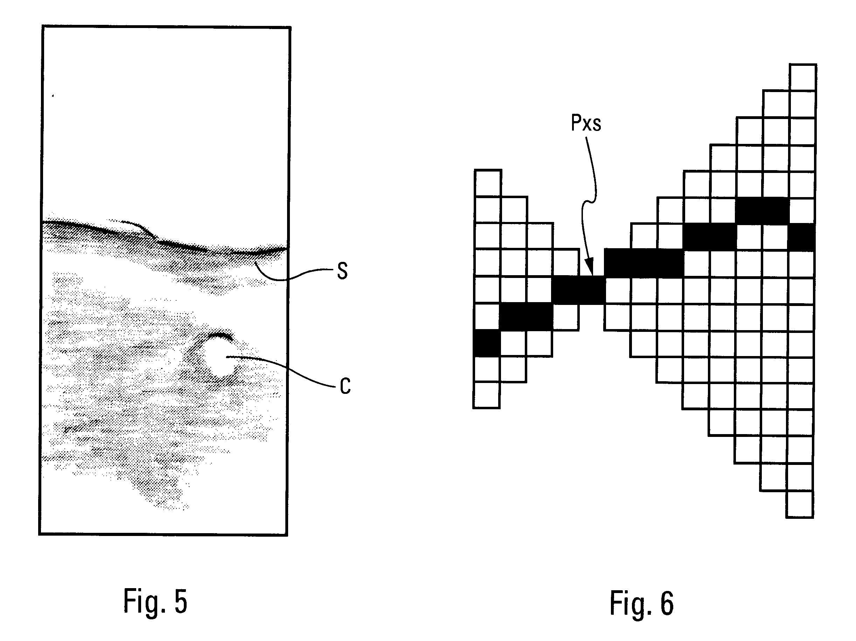

L'étape suivante consiste à former des segments continus de chemins de pixels Pₓ. Il n'est pas possible de former une ligne continue de chemins de pixels Pₓ allant d'un bord à l'autre de l'écran, étant donné que tous les pixels Pₓ ne sont pas jointifs. Ces segments continus sont représentés de manière très schématique et lissée sur la figure 5. On peut y observer quatre segments continus de chemins de pixels Pₓ situés sur la peau S et un segment continu situé sur le contour de la carotide C. Parmi les cinq segments, on identifie le plus long. De visu, il s'agit du segment situé le plus à gauche sur la figure 5. On sélectionne ensuite le pixel Pₓ qui est situé au centre de ce segment le plus long que l'on peut désigner sous le terme de pixel graine Pₓₛ, Ce pixel Pₓₛ est tout à fait unique, étant donné qu'il est assurément situé sur le contour de l'élément anatomique, en l'occurrence le contour de la peau. Ainsi, cette deuxième étape que l'on peut référencer b a permis à partir de colonnes de pixels K de déterminer un pixel graine Pₓₛ qui est assurément situé sur le contour de la peau.

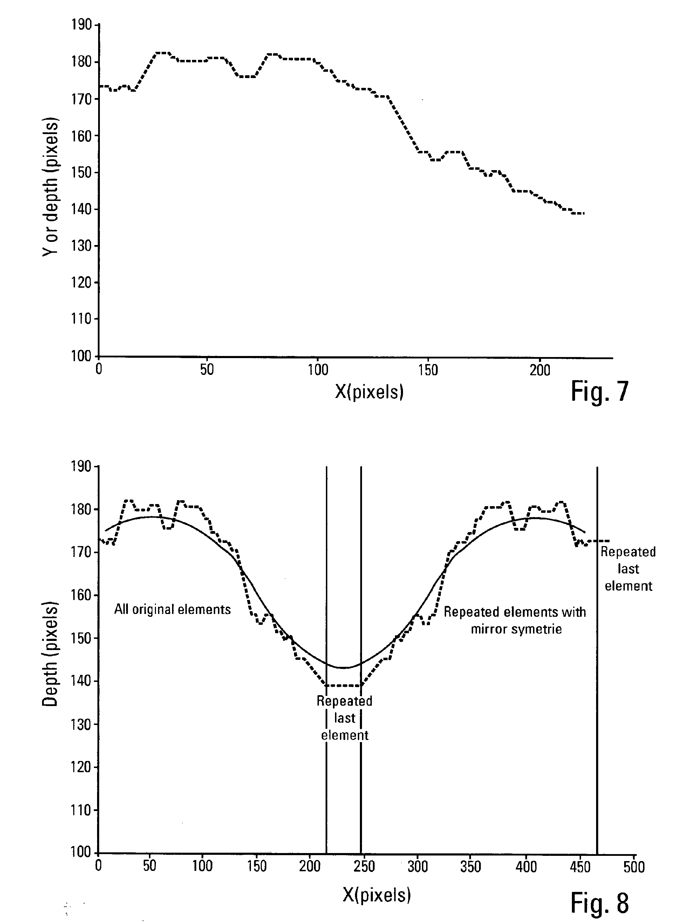

La prochaine étape consiste à former ou à reconstituer un chemin de pixels continu à partir du pixel graine Pₓₛ qui passe par les pixels ayant le meilleur score possible. Pour cela, on peut utiliser une technique qui est connue sous le terme de « technique de programmation dynamique ». La figure 6 vise à représenter de manière schématique la mise en oeuvre de cette technique de programmation dynamique. En partant du pixel central ou pixel graine Pₓₛ, on forme vers la droite et vers la gauche jusqu'au bord de l'image une pluralité de chemins continus de pixels ayant chacun un score de chemin. Ce score de chemin est une fonction des scores individuels des pixels constituant le chemin considéré. La fonction peut être de toute nature, comme par exemple la somme des scores de pixels du chemin. Parmi ces chemins continus, on sélectionne celui qui présente le meilleur score de chemin. Ce chemin ne passe pas forcément par tous les pixels Pₓ, étant donné qu'ils ne sont pas tous jointifs avec le pixel Pₓ précédent ou suivant. La technique de programmation dynamique va choisir parmi tous les pixels le pixel jointif qui va donner le meilleur score de chemin continu. Cette technique de programmation dynamique est par exemple également utilisée dans les correcteurs orthographiques sur ordinateur. Lorsqu'un mot a été mal orthographié, le correcteur va chercher parmi toutes les lettres celles qui ont la plus grande possibilité de compléter un mot proche de celui recherché. Le chemin de pixels continu ainsi constitué est formé de pixels directement jointifs ou alors uniquement jointifs au niveau de leur coin (on considère que les pixels sont représentés sous la forme de carrés ayant une nuance allant du noir au blanc). On obtient ainsi une courbe qui n'est pas lisse, alors que la peau est sensiblement lisse. Une courbe complète de la peau est représentée sur la figure 7. On peut y identifier les pixels qui sont raccordés soit directement soit par leur coin. Toutefois, cette courbe n'est pas lisse du tout.

La recherche préalable du pixel graine Pₓₛ est avantageuse, mais n'est pas obligatoire. On peut très bien sélectionner le chemin continu de meilleur score sans chercher à ce qu'il passe obligatoirement par le pixel graine. Toutefois, le passage obligatoire par le pixel graine permet un gain significatif en temps de calcul.

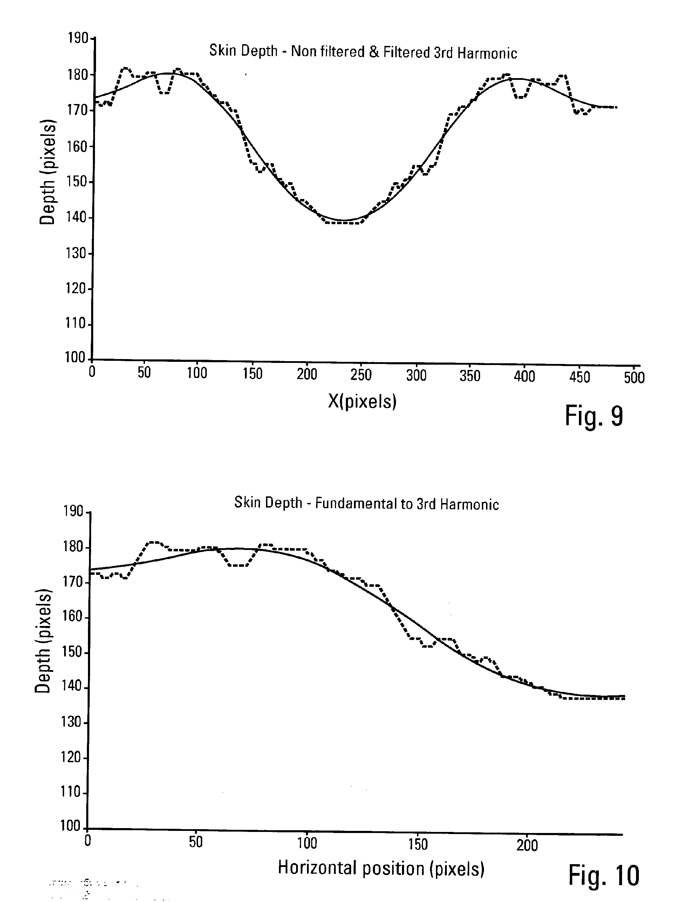

La prochaine étape, qui est optionnelle, consiste à lisser cette courbe formée par un chemin de pixels continu. Pour cela, la méthode de traçage de l'invention utilise les propriétés filtrantes de la transformation de Fourier. Etant donné que la courbe de la figure 7 n'est pas périodique, il est éventuellement nécessaire de constituer une courbe périodique en dupliquant la courbe avec une symétrie miroir et en reliant les deux courbes symétriques éventuellement avec un petit segment de liaison. Ceci est représenté sur la figure 8. On obtient ainsi une courbe couvrant une période connue. On peut alors filtrer cette courbe périodique en utilisant une transformation de Fourier avec un nombre limité de coefficients. De préférence, on utilise une transformation par séries de Fourier en se limitant à la troisième harmonique. Ceci est représenté sur la figure 9. Une transformation par séries de Fourier avec des harmoniques supérieures ne permet pas d'obtenir un lissage parfait de la courbe. C'est pourquoi, il est préférable de se limiter à deux ou trois harmoniques. On obtient ainsi une courbe périodique parfaitement lissée. Il suffit alors d'en extraire le segment de courbe qui correspond au contour de la peau. Ceci est représenté sur la figure 10. On obtient ainsi une courbe parfaitement lisse qui correspond avec une très grande probabilité au contour vraisemblable de la peau. Il suffit finalement de tracer cette courbe directement sur l'écran de visualisation en le superposant à la peau S. Ceci est représenté sur la figure 12.

La méthode de traçage qui vient d'être décrite peut également être appliquée pour tracer le contour vraisemblable de la carotide C, mais cela nécessite une étape préalable. En effet, étant donné que la carotide présente un contour sensiblement annulaire, et plus généralement en forme de boucle fermée, il n'est pas possible de former directement des colonnes de pixels K, étant donné que chaque colonne couperait le contour de la carotide en deux points. Ceci n'est pas tolérable, étant donné que le procédé de traçage selon l'invention a pour but de déterminer le pixel Pₓ avec le meilleur score, et non pas deux pixels avec le meilleur score. Par conséquent, pour pouvoir tout de même mettre en oeuvre le procédé de traçage qui vient d'être expliqué ci-dessus, la présente invention prévoit de former ou de tracer des rayons à partir d'un point situé à l'intérieur de la carotide C. Ceci est représenté de manière très fortement agrandie et schématique sur la figure 11. Le contour de la carotide C est représenté par une couronne d'épaisseur non uniforme. Des rayons Rc ont été tracés à partir du centre de la carotide. Toutefois, il n'est pas nécessaire de choisir absolument le centre de la carotide : en effet, tout point à l'intérieur de la carotide C est satisfaisant. Pour parvenir à la disposition en colonne nécessaire pour la méthode de traçage de l'invention, il suffit alors de disposer tous les rayons Rc parallèlement côte à côte à la manière d'un peigne. On se retrouve alors dans la même configuration que celle des colonnes K et toutes les étapes du procédé de traçage peuvent alors être mises en oeuvre pour déterminer le contour vraisemblable de la carotide. Il est à remarquer que la mise en forme de la courbe de manière à être périodique n'est pas nécessaire pour la carotide, étant donné qu'elle forme une boucle fermée sur elle-même. Au final, le contour vraisemblable de la carotide peut être reporté sur l'image de coupe en superposition sur la carotide, comme on peut le voir sur la figure 12. On dispose ainsi d'une image de coupe où le contour de la peau S et/ou de la carotide C sont clairement délimités.

Cette méthode de traçage du contour vraisemblable d'un élément anatomique est parfaitement bien adaptée pour être mise en oeuvre dans le procédé de surveillance du déplacement de la cible à traiter, comme on l'a vu précédemment. Il peut toutefois être mis en oeuvre dans d'autres circonstances où il est nécessaire de délimiter avec précision le contour d'un élément anatomique visible sur une vue en coupe d'un site anatomique.

## Revendications

1. Méthode de traçage du contour vraisemblable d'un élément anatomique (S, C) sur une image de coupe d'un site anatomique, l'image étant composée de pixels (Pᵢ) ayant des intensités différentes,le contour de l'élément anatomique (S, C) étant représenté par des pixels d'intensité caractéristique sensiblement identique et bordé de pixels d'intensités sensiblement différentes de manière à identifier visuellement l'élément anatomique (S, C) sur l'image de coupe sans pouvoir précisément délimiter son contour, la méthode comprenant les étapes suivantes :
a) former des colonnes (K) de pixels (Pᵢ) passant par l'élément anatomique (S, C),
b) attribuer à chaque pixel (Pᵢ) un score de pixel représentatif de la probabilité pour le pixel d'être situé sur le contour de l'élément anatomique (S, C),
c) constituer une matrice de scores de pixel à partir de plusieurs colonnes (K) de pixels, et définir de nombreux chemins continus de pixels passant chacun par un seul pixel de chaque colonne,
d) attribuer à chaque chemin continu un score de chemin qui est une fonction des scores des pixels constituant le chemin continu,
e) sélectionner, parmi un ensemble de chemins continus, le chemin qui a le meilleur score de chemin, ce chemin représentant le contour vraisemblable de l'élément anatomique,
**caractérisé en ce que** l'étape c) comprend en outre les étapes suivantes :
c1) identifier, par chaque colonne (K), le pixel (Pₓ) qui a le score maximal dans la colonne (K),
c2) former des segments continus de pixels (Pₓ),
c3) identifier le segment continu le plus long, ce segment ayant un pixel central (Pₓₛ), qui est assurément situé sur le contour de l'élément anatomique,
c4) restreindre l'ensemble des chemins continus aux chemins passant par le pixel central (Pₓₛ).

2. Méthode de traçage selon la revendication 1, dans laquelle l'étape b) comprend l'étape suivante :
b1) établir un différentiel d'intensité pour chaque pixel entre une bande moyennée supérieure (Bₛ) de pixels et une bande moyennée inférieure (Bᵢ) de pixels situées de part et d'autre du pixel considéré (Pᵢ), ce différentiel représentant le score de pixel.

3. Méthode de traçage selon la revendication 1 ou 2 comprenant en outre, après l'étape e), une étape de lissage du chemin continu représentant le contour vraisemblable

4. Méthode de traçage selon la revendication 3, l'étape de lissage étant obtenue par filtrage selon les étapes suivantes :
e1) rendre éventuellement périodique le chemin continu de l'étape c), si cela n'est pas le cas, pour obtenir une courbe périodique,
e2) filtrer la courbe périodique en ne conservant que les premières harmoniques de la décomposition en série de Fourier pour la lisser,
e3) extraire le contour continu lissé vraisemblable de la courbe lissée.

5. Méthode de traçage selon l'une quelconque des revendications précédentes, dans lequel l'étape a) comprend l'étape suivante lorsque le contour de l'élément anatomique (C) forme une boucle fermée :
a1) tracer des rayons (R_{c}) à partir d'un point (O) situé dans la boucle fermée, les rayons (R_{c}) croisant une fois le contour de l'élément anatomique (C),
a2) arranger les rayons (R_{c}) parallèlement côte à côte pour former des colonnes de pixels (K).

6. Méthode de traçage selon l'une quelconque des revendications précédentes, dans lequel les étapes d) et e) sont effectuées simultanément à l'aide d'une technique de programmation dynamique.

7. Procédé de surveillance d'un déplacement d'une cible à traiter T, notamment par ultrasons, au cours de son traitement, à partir d'une image de coupe d'un site anatomique représentant la cible T, le procédé comprenant les étapes suivantes :
- prendre une image de référence du site anatomique avant le déplacement,
- choisir au moins un repère anatomique (S, C) visible sur l'image de référence,
- tracer le contour du repère anatomique (S, C) sur l'image de référence en utilisant le procédé de traçage selon l'une quelconque des revendications 1 à 6,
- reporter le tracé du contour sur l'image de coupe du site anatomique
- comparer lors du traitement la position du site anatomique sur l'image avec la position du contour tracé pour détecter un éventuel déplacement inattendu de la cible.

8. Procédé selon la revendication 7, comprenant de suspendre le traitement de la cible lorsqu'un déplacement inattendu du contour du repère anatomique est détecté à partir d'une image de référence.

9. Procédé selon la revendication 7 ou 8, comprenant de régler les paramètres de traitement en fonction de la position du repère.

10. Dispositif de traitement thérapeutique comprenant :
- des moyens de traitement thérapeutique (1) pour traiter une cible (T),
- des moyens d'imagerie (2, 21, 22) fournissant des images de coupe d'un site anatomique comprenant la cible à traiter (T), et
- des moyens (151) pour suivre le déplacement d'au moins un repère anatomique visible sur les images de coupe,
**caractérisé en ce que** les moyens de suivi (151) comprennent des moyens de traçage sur les images de coupe du contour du repère anatomique (S, C) pour détecter un éventuel déplacement inattendu du contour lors du traitement, les moyens de traçage comprenant un logiciel mettant en oeuvre la méthode de traçage des revendications 1 à 6.

11. Dispositif selon la revendication 10, comprenant en outre des moyens de suspension (152) du traitement qui sont activés lorsque le déplacement inattendu dépasse une limite prédéterminée.

## Patentansprüche

1. Verfahren zum Verfolgen der wahrscheinlichen Kontur eines anatomischen Elementes (S, C) auf beziehungsweise in einem Bild eines Querschnitts einer anatomischen Stelle, wobei das Bild aus Pixeln (Pᵢ) mit unterschiedlichen Intensitäten besteht, wobei die Kontur des anatomischen Elementes (S, C) durch Pixel einer charakteristischen Intensität dargestellt wird, die im Wesentlichen identisch ist, und von Pixeln eingefasst wird, die eine im Wesentlichen verschiedene Intensität haben, so dass das anatomische Element (S, C) auf dem Bild eines Querschnitts visuell identifiziert werden kann, ohne dass dessen Kontur genau begrenzt werden kann, wobei das Verfahren die folgenden Schritte aufweist:
a) Bilden von Spalten (K) von Pixeln (Pᵢ), die durch das anatomische Element (S, C) hindurchführen,
b) Zuordnen eines Pixelwertes zu jedem Pixel (Pᵢ), wobei der Pixelwert die Wahrscheinlichkeit für das Pixel darstellt, sich auf der Kontur des anatomischen Elementes (S, C) zu befinden,
c) Bilden einer Matrix von Pixelwerten aus mehreren Spalten (K) von Pixeln und Definieren zahlreicher durchgehender Pixelwege, die jeweils durch ein einzelnes Pixel jeder Spalte hindurchführen,
d) Zuordnen eines Wegwertes zu jedem durchgehenden Weg, der eine Funktion der Pixelwerte ist, die den durchgehenden Weg bilden,
e) Auswählen aus einer Menge von durchgehenden Wegen den Weg, der den besten Wegwert hat, wobei dieser Weg die wahrscheinliche Kontur des anatomischen Elementes darstellt, **dadurch gekennzeichnet, dass**
Schritt c) des Weiteren die folgenden Schritte aufweist:
c1) Identifizieren des Pixels (Pₓ) für jede Spalte (K), welches den höchsten Wert in der Spalte (K) hat,
c2) Bilden von durchgehenden Segmenten von Pixeln (P_{X}),
c3) Identifizieren des längsten durchgehenden Segments, wobei dieses Segment ein zentrales Pixel (P_{XS}) aufweist, welches sich sicher auf der Kontur des anatomischen Elementes befindet,
c4) Beschränken der Gesamtheit der durchgehenden Wege auf diejenigen Wege, die durch das zentrale Pixel (P_{XS}) hindurchführen.

2. Verfahren zum Verfolgen nach Anspruch 1, wobei Schritt b) den folgenden Schritt aufweist:
b1) Erstellen eines Intensitätsdifferentials für jedes Pixel zwischen einem mittleren oberen Band (Bs) von Pixeln und einem mittleren unteren Band (Bi) von Pixeln, die sich zu beiden Seiten des betreffenden Pixels (Pi) befinden, wobei dieses Differential den Pixelwert darstellt.

3. Verfahren zum Verfolgen nach Anspruch 1 oder 2, des Weiteren aufweisend nach Schritt e) einen Schritt des Glättens des durchgehenden Weges, der die wahrscheinliche Kontur darstellt.

4. Verfahren zum Verfolgen nach Anspruch 3, wobei der Schritt des Glättens durch Filterung nach den folgenden Schritten erhalten wird:
e1) den durchgehenden Weg aus Schritt c) gegebenenfallsperiodisch machen, wenn das nicht der Fall ist, um eine periodische Kurve zu erhalten,
e2) Filtern der periodischen Kurve, wobei nur die ersten Oberschwingungen der Zerlegung in eine Fourierreihe zur Glättung beibehalten werden,
e3) Extrahieren der wahrscheinlichen geglätteten durchgehenden Kontur der geglätteten Kurve.

5. Verfahren zum Verfolgen nach einem der vorhergehenden Ansprüche, wobei Schritt a) den folgenden Schritt aufweist, wenn die Kontur des anatomischen Elementes (C) eine geschlossene Schleife bildet:
a1) Verfolgen von Strahlen (R_{c}) ausgehend von einem Punkt (O), der sich in der geschlossenen Schleife befindet, wobei die Strahlen (R_{c}) einmal die Kontur des anatomischen Elementes (C) kreuzen,
a2) Anordnen der Strahlen (R_{c}) parallel nebeneinander, um Pixelspalten (K) zu bilden.

6. Verfahren zum Verfolgen nach einem der vorhergehenden Ansprüche, wobei die Schritte d) und e) mittels einer dynamischen Programmiertechnik gleichzeitig erfolgen.

7. Verfahren zur Überwachung einer Verschiebung eines zu behandelnden Ziels T, insbesondere für Ultraschall, während dessen Behandlung, ausgehend von einem Bild eines Querschnitts einer anatomischen Stelle, die das Ziel T darstellt, wobei das Verfahren die folgenden Schritte aufweist:
- Aufnehmen eines Referenzbildes der anatomischen Stelle vor der Verschiebung,
- Auswählen mindestens eines anatomischen Punktes (S, C), der auf dem Referenzbild sichtbar ist,
- Verfolgen der Kontur des anatomischen Punktes (S, C) auf dem Referenzbild unter Verwendung des Verfahrens zum Verfolgen nach einem der Ansprüche 1 bis 6,
- Aufzeichnen der Verfolgung der Kontur auf dem Bild des Querschnitts der anatomischen Stelle,
- während der Behandlung Vergleichen der Position der anatomischen Stelle auf dem Bild mit der Position der verfolgten Kontur zum Erkennen einer möglichen unerwarteten Verschiebung des Ziels.

8. Verfahren nach Anspruch 7, aufweisend das Unterbrechen der Behandlung des Ziels, wenn eine unerwartete Verschiebung der Kontur des anatomischen Punktes ausgehend von einem Referenzbild erkannt wird.

9. Verfahren nach Anspruch 7 oder 8, aufweisend das Regeln der Behandlungsparameter in Abhängigkeit der Position des Punktes.

10. Therapeutische Behandlungsvorrichtung, aufweisend:
- therapeutische Behandlungsmittel (1) zum Behandeln eines Ziels (T),
- Abbildungsmittel (2, 21, 22), die Bilder eines Querschnitts einer anatomischen Stelle liefern, die das zu behandelnde Ziel (T) aufweist, und
- Mittel (151) zum Nachfolgen der Verschiebung mindestens eines anatomischen Punktes, der auf den Bildern des Querschnitts sichtbar ist,
**dadurch gekennzeichnet, dass** die Mittel zum Nachfolgen (151) Mittel zum Verfolgen auf den Bildern des Querschnitts der Kontur des anatomischen Punktes (S, C) aufweisen, um eine mögliche unerwartete Verschiebung der Kontur während der Behandlung zu erkennen, wobei die Mittel zum Verfolgen eine Software aufweisen, die das Verfahren zum Verfolgen der Ansprüche 1 bis 6 ausführt.

11. Vorrichtung nach Anspruch 10, des Weiteren aufweisend Mittel zum Unterbrechen der Behandlung (152), die aktiviert werden, wenn die unterwartete Verschiebung einen vorbestimmten Grenzwert überschreitet.

## Claims

1. A method of tracing the likely contour of an anatomical element (S, C) in a sectional image of an anatomical site, the image being composed of pixels (Pᵢ) having different intensities, the contour of the anatomical element (S, C) being represented by pixels of substantially identical characteristic intensity and bordered by pixels of substantially different intensities so as to identify the anatomical element (S, C) visually in the sectional image without it being possible to define its contour precisely, the method comprising the following steps:
a) forming columns (K) of pixels (Pᵢ) passing through the anatomical element (S, C);
b) assigning each pixel (Pᵢ) a pixel score representing the probability of the pixel being situated on the contour of the anatomical element (S, C);
c) constituting a matrix of pixel scores from a plurality of columns (K) of pixels and defining numerous continuous paths of pixels, each passing through a single pixel of each column;
d) assigning each continuous path a path score that is a function of the scores of the pixels constituting the continuous path;
e) selecting from a set of continuous paths the path that has the best path score, that path representing the likely contour of the anatomical element,
**characterized in that** the step c) further comprises the following steps:
• c1) identifying, for each column (K), the pixel (Pₓ) in the column (K) that has the maximum score;
• c2) forming continuous segments of pixels (Px);
• c3) identifying the longest continuous segment, this segment having a central pixel (Pₓₛ) that is definitely situated on the contour of the anatomical element;
• c4) restricting the set of continuous paths to paths passing through the central pixel (Pₓₛ).

2. A tracing method according to claim 1, wherein the step b) comprises the following step:
• b1) establishing an intensity differential for each pixel between an averaged upper band (Bₛ) of pixels and an averaged lower band (Bᵢ) of pixels situated on either side of the pixel (Pᵢ) concerned, this differential representing the pixel score.

3. A tracing method according to claim 1 or 2, further comprising, after the step e), a step of smoothing the continuous path representing the likely contour.

4. A tracing method according to claim 3, wherein the smoothing step consists of the following filtering steps:
• e1) if the continuous path from the step c) is not periodic, rendering it periodic to obtain a periodic curve;
• e2) filtering the periodic curve to smooth it, retaining only the first harmonics of the Fourier series;
• e3) extracting the smoothed continuous likely contour from the smoothed curve.

5. A tracing method according to any preceding claim, wherein the step a) comprises the following step if the contour of the anatomical element (C) forms a closed loop:
• a1) tracing radii (R_{c}) from a point (0) situated inside the closed loop, each radius (R_{c}) crossing the contour of the anatomical element (C) once;
• a2) arranging the radii (R_{c}) parallel and side by side to form columns (K) of pixels.

6. A tracing method according to any preceding claim, wherein the steps d) and e) are effected simultaneously by means of a dynamic programming technique.

7. A method of monitoring movement of a target T to be treated, notably by ultrasound, during its treatment, on the basis of a sectional image of an anatomical site representing the target T, the method comprising the following steps:
• capturing a reference image of the anatomical site before the movement;
• choosing at least one anatomical marker (S, C) visible on the reference image;
• tracing the contour of the anatomical marker (S, C) on the reference image using the tracing method according to any one of claims 1 to 6;
• transferring the trace of the contour onto the sectional image of the anatomical site;
• comparing the position of the anatomical site on the image with the position of the traced contour during treatment to detect unexpected movement of the target.

8. A method according to claim 7, comprising suspending the treatment of the target if an unexpected movement of the contour of the anatomical marker is detected from a reference image.

9. A method according to claim 7 or 8, comprising adjusting the treatment parameters as a function of the position of the marker.

10. A therapeutic treatment device comprising:
• therapeutic treatment means (1) for treating a target (T);
• imaging means (2, 21, 22) providing sectional images of an anatomical site comprising the target (T) to be treated; and
• means (151) for tracking movement of at least one anatomical marker visible in the sectional images;
the device being **characterized in that** the tracking means (151) comprise means for tracing the contour of the anatomical marker (S, C) on the sectional images to detect unexpected movement of the contour during treatment, the tracing means comprising software executing the tracing method of claims 1 to 6.

11. A device according to claim 10, further comprising means (152) for suspending treatment that are activated if the unexpected movement exceeds a predetermined limit.
